# EUROPEAN PATENT APPLICATION

(11) **EP 3 285 212 A1**
(43) Date of publication of application: **21.02.2018**
(21) Application number: 16184759.5
(22) Date of filing: 18.08.2016
(51) Int. Cl.: G06Q 10/04

(54) **METHOD FOR ENHANCED MANAGEMENT OF A PUBLIC UTILITY SYSTEM, THE PUBLIC UTILITY SYSTEM COMPRISING A PLURALITY OF OPERATING COMMUNICATION-ENABLED PUBLIC UTILITY DEVICES AND A COMMUNICATION MEANS FOR COMMUNICATING, PUBLIC UTILITY SYSTEM, COMMUNICATION-ENABLED PUBLIC UTILITY DEVICE, PROGRAM AND COMPUTER PROGRAM PRODUCT**

(71) Applicant: Deutsche Telekom AG, 53113 Bonn (DE)
(72) Inventor: DIANESE, Gianluca, 50374 Erftstadt (DE); BENTZ, Andreas, 53604 Bad Honnef (DE)
(74) Representative: Schwöbel, Thilo K.

(57) **Abstract**

The invention relates to a method for enhanced management of a public utility system, the public utility system comprising a plurality of operating communication-enabled public utility devices, wherein the public utility system further comprises a communication means for communicating
-- between at least two operating communication-enabled public utility devices, and/or
-- between, on the one hand, at least one of the operating communication-enabled public utility devices, and, on the other hand, the communication means, and/or
-- between, on the one hand, at least one sensor device or a sensor module of a communication-enabled public utility device, and, on the other hand, the communication means and/or one or a plurality of communication-enabled public utility devices,
wherein the plurality of operating communication-enabled public utility devices are split into a plurality groups of communication-enabled public utility devices, wherein the public utility system comprises a system management layer that interfaces with a database entity, the database entity having a device type-related record for each device type or group of the operating communication-enabled public utility devices, wherein the method comprises the steps of:
-- in a first step, each operating communication-enabled public utility device of the plurality of operating communication-enabled public utility devices is assigned to a specific group of communication-enabled public utility devices,
-- in a second step, subsequent to the first step, a number of measurements are conducted by means of the at least one sensor device or the at least one sensor module,
-- either related to individual communication-enabled public utility devices,
-- or collectively related to a number of communication-enabled public utility devices,
wherein the measurements conducted in the second step yield certain measurement data, wherein the measurement data are - dependent on the assignment of a communication-enabled public utility device of the plurality of communication-enabled public utility devices to the specific group of communication-enabled public utility devices
- related to the respective type or group of operating communication-enabled public utility devices or to the respective plurality of types or groups of operating communication-enabled public utility devices, and stored in the database entity as part of the respective device type-related record for the type or group of operating communication-enabled public utility devices or for the respective plurality of types or groups of operating communication-enabled public utility devices, respectively.

## Description

### BACKGROUND

The present invention relates to a method for enhanced management of a public utility system, the public utility system comprising a plurality of operating communication-enabled public utility devices, wherein the public utility system further comprises a communication means for communicating between at least two operating communication-enabled public utility devices, and/or between, on the one hand, at least one of the operating communication-enabled public utility devices, and, on the other hand, the communication means, and/or between, on the one hand, at least one sensor device or a sensor module of a communication-enabled public utility device, and, on the other hand, the communication means and/or one or a plurality of communication-enabled public utility devices.

Furthermore, the present invention relates to a public utility system for enhanced management thereof, the public utility system comprising a plurality of operating communication-enabled public utility devices, wherein the public utility system further comprises a communication means for communicating between at least two operating communication-enabled public utility devices, and/or between, on the one hand, at least one of the operating communication-enabled public utility devices, and, on the other hand, the communication means, and/or between, on the one hand, at least one sensor device or a sensor module of a communication-enabled public utility device, and, on the other hand, the communication means and/or one or a plurality of communication-enabled public utility devices.

Additionally, the present invention relates to a communication-enabled public utility device for enhanced management of a public utility system, the public utility system comprising a plurality of operating communication-enabled public utility devices, the public utility system further comprising a communication means for communicating between at least two operating communication-enabled public utility devices, and/or between, on the one hand, at least one of the operating communication-enabled public utility devices, and, on the other hand, the communication means, and/or between, on the one hand, at least one sensor device or a sensor module of a communication-enabled public utility device, and, on the other hand, the communication means and/or one or a plurality of communication-enabled public utility devices.

Furthermore, the present invention relates to a program and to a computer program product for enhanced management of a public utility system according to the inventive method, the inventive public utility system and the inventive communication-enabled public utility device.

Data collection and monitoring as well as providing public services such as lighting in an urban environment can have a number of applications, e.g. including transportation, sensing environmentally relevant data, urban lighting and/or healthcare. In the context of the present invention, one aspect relates to urban lighting. The deployment of new public lighting devices or luminaries, especially LED-based luminaries, across urban and industrial spaces is seen as one of the fastest and most efficient ways to drastically reduce energy consumption and achieve the objectives of sustainable economical development. While there is a potential to use public lighting devices in a flexible manner and/or by means of remotely controlling such devices, and to reduce overall TCO (total cost of ownership) from 15% to 30% compared with the infrastructure costs related to corresponding traditional infrastructures, there is, however, a need in providing the operations efficiency in order to actually realize this increased efficiency.

### SUMMARY

It is an object of the present invention to provide the possibility to efficiently operate a public utility system such that such a public utility system is both able to be operated in an efficient, easy and uncomplicated manner and the operation of the system be managed in an efficient and balanced manner.

The object of the present invention is achieved by a method for enhanced management of a public utility system, the public utility system comprising a plurality of operating communication-enabled public utility devices, wherein the public utility system further comprises a communication means for communicating
-- between at least two operating communication-enabled public utility devices, and/or
-- between, on the one hand, at least one of the operating communication-enabled public utility devices, and, on the other hand, the communication means, and/or
-- between, on the one hand, at least one sensor device or a sensor module of a communication-enabled public utility device, and, on the other hand, the communication means and/or one or a plurality of communication-enabled public utility devices, wherein the plurality of operating communication-enabled public utility devices are split into a plurality groups of communication-enabled public utility devices, wherein the public utility system comprises a system management layer that interfaces with a database entity, the database entity having a device type-related record for each device type or group of the operating communication-enabled public utility devices, wherein the method comprises the steps of:
-- in a first step, each operating communication-enabled public utility device of the plurality of operating communication-enabled public utility devices is assigned to a specific group of communication-enabled public utility devices,
-- in a second step, subsequent to the first step, a number of measurements are conducted by means of the at least one sensor device or the at least one sensor module,
   -- either related to individual communication-enabled public utility devices,
   -- or collectively related to a number of communication-enabled public utility devices,
   wherein the measurements conducted in the second step yield certain measurement data, wherein the measurement data are - dependent on the assignment of a communication-enabled public utility device of the plurality of communication-enabled public utility devices to the specific group of communication-enabled public utility devices
-- related to the respective type or group of operating communication-enabled public utility devices or to the respective plurality of types or groups of operating communication-enabled public utility devices, and stored in the database entity as part of the respective device type-related record for the type or group of operating communication-enabled public utility devices or for the respective plurality of types or groups of operating communication-enabled public utility devices, respectively.

It is thereby advantageously possible according to the present invention that the complexity in handling different technological ecosystems of different communication-enabled public utility devices can be reduced, and the operation and management of the public utility system and/or communication-enabled public utility devices be rendered more efficient and balanced, especially by means of a structured ICT approach. Thereby, it is advantageously possible to achieve the objectives of sustainable economic development and responsible utilization and allocation of resources, even though the existing and/or installed portfolio of communication-enabled public utility devices, especially luminaries, is fragmented and heterogeneous, as of today, many utilities/service companies are operating networks built on the coexistence of different lighting technologies (HPS discharge lamps, LED, etc.), having a major impact on the related operations, because these different technologies allow different levels of interaction between the lamp/luminaries and the corresponding management tools (Software applications). Due to the costs of the new LED and energy efficient luminaries, many of the new street lighting networks are being built using technologies from different vendors (more than one tender is necessary to complete the replacement of the old luminaries and so it is very probable that more than one vendor comes to play in the same "network") and, on the other hand, these tendering processes are becoming longer (to assure proper funding) and, for this reason, many of the new lighting networks are composed by coexisting legacy and new technologies.

According to the present invention, one of the key pillars of new lighting infrastructures is the communication networks necessary to operate, maintain and monitor the health of the street lighting ecosystems, and thereby fully realize the benefits deriving from a "balanced" operations/steering of these complex ecosystems, i.e. one of the main objectives is increasing the efficiency of these operations.

Depending on the electronic components and/or the optical components such as refractors, lenses and/or cooling mechanisms used in these new luminaries, the lumens output curve (i.e. especially a lighting output being the luminous flux (measured in Lumen) or the luminous flux per unit area (illuminance or luminous emittance, measured in Lux)) at different wattage inputs can greatly vary in different luminaries even with the same nominal wattage consumption (especially in case of different models and/or different manufacturers). According to the present invention, it is advantageously possible that by properly managing such different (light) outputs, by identifying the parameters impacting on the luminaries' performance and by assuring an homogeneous luminosity across the various networks element of an area (or a predetermined (or required, especially regulated) lumens output (or a lighting output being the luminous flux or the luminous flux per unit area)) it is possible to realize considerable savings (and/or direct benefits) regarding operating costs as well as positive impact on the lifetime duration of the luminaries, i.e. reducing their "wear and tear". Furthermore, learning from the performance of the luminaries, on the basis of their characteristics (brand, model, wattage, electronic components, lighting technology), helps designing specific operational pattern (or algorithms) to automatically change the behavior of the infrastructure over time (e.g., a specific model of a luminary (of a specific vendor or manufacturer), using a specific ballast, is known to have a specific decay curve (e.g., after 12 months of operations) that brings the output down (from 100%) to 95% and this remains stable for the subsequent 24 months, etc.). According to the present invention, all of these pattern becomes part of a database driven behavioral reference model, with information that helps configuring and adapting - via pre-defined (based on historical, big data analytics) and self-learning (able to understand how specific external factors could impact on their results) algorithms - the specific operational models on the basis of the specific characteristics of the luminaries deployed in the network. Hence, according to the present invention, all these pieces of information are combined such as to provide a more efficient operation of such complex networks of different lighting technologies. This is realized by means of:
-- The public utility system comprises a plurality of operating communication-enabled public utility devices as well as a communication means for communicating either between the communication-enabled public utility devices and/or between the communication-enabled public utility devices and the communication means and/or between at least one sensor device or a sensor module of a communication-enabled public utility device and the communication means and/or one or a plurality of communication-enabled public utility devices. A communication means - typically a telecommunications network and especially in the form of a mobile communication network - provides the possibility for communicating both between the operating communication-enabled public utility devices as well as between at least one of the operating communication-enabled public utility devices and the communication means (or telecommunications network). According to an alternative embodiment of the present invention, only the possibility for communicating between at least one of the operating communication-enabled public utility devices and the communication means (or telecommunications network) is provided by the communication means, which is- in that case - typically a mobile communication network.
-- The plurality of operating communication-enabled public utility devices are split into a plurality groups of communication-enabled public utility devices, and the public utility system comprises a system management layer that interfaces with a database entity, the database entity having a device type-related record for each device type or group of the operating communication-enabled public utility devices. Advantageously, the database entity also has a device-related record regarding each of the operating communication-enabled public utility devices, thereby providing the possibility of a new communication-enabled public utility device (i.e. that is not yet operating as part of the public utility system) being added to the system by means of a communication occurring (and involving the public utility system) regarding the new communication-enabled public utility device such that - regarding the new communication-enabled public utility device - the system management layer is contacted, and a device-related record regarding the new communication-enabled public utility device being generated or validated, wherein advantageously, the communication regarding the new communication-enabled public utility device is initiated involving the communication-enabled public utility device itself, i.e. an information is transmitted from the communication-enabled public utility device (to be integrated in the public utility system) to the system management layer of the public utility system.
-- In a first step, each operating communication-enabled public utility device of the plurality of operating communication-enabled public utility devices is assigned to a specific group of communication-enabled public utility devices. The "natural" assignment consists of assigning different communication-enabled public utility devices of one manufacturer and/or vendor and being of the same or almost same type (and also, perhaps, having been installed and/or put into operation at roughly the same time) into one specific group of communication-enabled public utility devices.
-- In a second step, subsequent to the first step, a number of measurements are conducted by means of the at least one sensor device or the at least one sensor module, either related to individual communication-enabled public utility devices, or collectively related to a number of communication-enabled public utility devices, wherein the measurements conducted in the second step yield certain measurement data, and the measurement data are - dependent on the assignment of a communication-enabled public utility device of the plurality of communication-enabled public utility devices to the specific group of communication-enabled public utility devices - related to the respective type or group of operating communication-enabled public utility devices or to the respective plurality of types or groups of operating communication-enabled public utility devices, and stored in the database entity as part of the respective device type-related record for the type or group of operating communication-enabled public utility devices or for the respective plurality of types or groups of operating communication-enabled public utility devices, respectively.

The approach according to the present invention especially comprises interfaces between at least a system management layer and a data management layer (as well as the communication-enabled public utility devices in the field (i.e. installed in a public or private area), a data transport layer from the devices to the platform (i.e. the communication means to provide communication capacity between (at least a part of) the different communication-enabled public utility devices and/or between the communication-enabled public utility devices and the communication means)).

According to the present invention it is preferred that the device type-related records for each device type or group of operating communication-enabled public utility devices are used to adapt or to optimize the operation of the respective device type or group of operating communication-enabled public utility devices, especially by means of individually controlling - at least for each device type or group of operating communication-enabled public utility devices - at least one operational parameter out of the following operation parameters:
-- input voltage,
-- input current,
wherein each device type or group of operating communication-enabled public utility devices is especially controlled such that the output of the corresponding communication-enabled public utility devices, especially a lighting output being the luminous flux (measured in Lumen) or the luminous flux per unit area (illuminance or luminous emittance, measured in Lux), is as constant as possible over the lifetime of the respective communication-enabled public utility devices or follows as accurately as possible a certain predefined or instantaneously determined value or set-point.

By means of using the device type-related records for each device type or group of operating communication-enabled public utility devices in order to adapt or to optimize the operation of the respective device type or group of operating communication-enabled public utility devices (especially by means of individually controlling - at least for each device type or group of operating communication-enabled public utility devices - at least the input voltage and/or the input current as operational parameters), it is advantageously possible to ensure that the output of the corresponding communication-enabled public utility devices, especially a lighting output being the luminous flux (measured in Lumen) or the luminous flux per unit area (illuminance or luminous emittance, measured in Lux), is as constant as possible over the lifetime of the respective communication-enabled public utility devices or follows as accurately as possible a certain predefined or instantaneously determined value or set-point. It is thereby especially possible to minimize the input of resources, especially energy, and nevertheless be able to ensure a defined output.

According to a further preferred embodiment of the present invention, at least part of the measurement data, provided by the at least one sensor device or the at least one sensor module, are used to determine the predefined or instantaneously determined value or set-point related to the output of the communication-enabled public utility devices corresponding to the respective device type or group of operating communication-enabled public utility devices.

By means of using at least part of the measurement data, provided by the at least one sensor device or the at least one sensor module, to determine the predefined or instantaneously determined value or set point related to the output of the communication-enabled public utility devices to the respective device type or group of operating communication-enabled public utility devices, it is advantageously possible to realize an operation of the communication-enabled public utility devices in the public utility system or a management thereof that is very flexible and very efficient, and which is especially able to provide a control of the communication-enabled public utility devices based on a comparably fine granularity. This is especially advantageous in case of using a re-assignment or re-grouping of communication-enabled public utility devices into different device types or groups of operating communication-enabled public utility devices, i.e. by means of assigning at least one communication-enabled public utility device of the plurality of communication-enabled public utility devices to a different further specific group of communication-enabled public utility devices compared to the specific group of communication-enabled public utility devices to which the respective communication-enabled public utility devices have been assigned to in the first step. Thereby, it is advantageously possible, e.g., to change or to adapt the granularity by means of which the communication-enabled public utility devices are controlled.

According to a further preferred embodiment of the present invention, the method comprises a third step, subsequent to the first step, the third step comprising repeating the assignment - performed in the first step -, resulting in assigning at least one communication-enabled public utility device of the plurality of communication-enabled public utility devices to a different further specific group of communication-enabled public utility devices compared to the specific group of communication-enabled public utility devices to which the respective communication-enabled public utility devices have been assigned to in the first step,
wherein the further specific group of communication-enabled public utility devices especially corresponds to a group of communication-enabled public utility devices having been newly created subsequent to the first step.

By means of such a re-assignment or re-grouping of communication-enabled public utility devices into different device types or groups of operating communication-enabled public utility devices (i.e. by means of assigning at least one communication-enabled public utility device of the plurality of communication-enabled public utility devices to a different further specific group of communication-enabled public utility devices compared to the specific group of communication-enabled public utility devices to which the respective communication-enabled public utility devices have been assigned to in the first step), it is especially advantageously possible to be able to change or to adapt the assignment of the communication-enabled public utility devices, especially by means of introducing new groups of communication-enabled public utility devices.

According to a further embodiment of the present invention, it is also preferred that, the method comprises a fourth step, prior to the second step or subsequent to the first step, the fourth step comprising storing initial device type-related information in the database entity, the initial device type-related information being especially related to the further specific group of communication-enabled public utility devices having been newly created subsequent to the first step.

Thereby, it is advantageously possible that the initial device type-related information (of the further specific group of communication-enabled public utility devices having been newly created subsequent to the first step, i.e. the further specific group corresponding, in this situation, to a "child" group) can be derived from the device type-related information of the specific group of communication-enabled public utility devices (or "parent" group) in an efficient manner.

According to the present invention it is furthermore preferred that by means of the system management layer the data transport and the data management is decoupled from the management of the communication-enabled public utility devices.

By means of decoupling the data transport and the data management, it is advantageously possible to unify and automate the network management interfaces and allows to commission, authenticate and interface devices from a unified control center.

According to the present invention it is furthermore preferred that the public utility system correspond, at least inter alia, to an intelligent lighting system, and wherein the communication-enabled public utility devices correspond to intelligent lighting devices, especially providing illumination to a street or to a premises served by the intelligent lighting system.

It is thereby advantageously possible according to the present invention that intelligent public utility systems can be easily provided.

According to the present invention it is furthermore preferred that the at least one sensor device or the at least one sensor modules of a communication-enabled public utility device are light sensor devices and/or light sensor modules and/or current sensor devices and/or current sensor modules and/or voltage sensor devices and/or voltage sensor modules, especially having processing capabilities, especially as light control and/or as traffic light control and/or as video cameras and/or as camera devices and/or as infra-red sensor means.

Thereby, it is advantageously possible to provide additional functions and/or public services by means of the inventive method and inventive public utility system.

Furthermore, the present invention relates to a public utility system for enhanced management thereof, the public utility system comprising a plurality of operating communication-enabled public utility devices, wherein the public utility system further comprises a communication means for communicating
-- between at least two operating communication-enabled public utility devices, and/or
-- between, on the one hand, at least one of the operating communication-enabled public utility devices, and, on the other hand, the communication means, and/or
-- between, on the one hand, at least one sensor device or a sensor module of a communication-enabled public utility device, and, on the other hand, the communication means and/or one or a plurality of communication-enabled public utility devices, wherein the plurality of operating communication-enabled public utility devices are split into a plurality groups of communication-enabled public utility devices, wherein the public utility system comprises a system management layer that interfaces with a database entity, the database entity having a device type-related record for each device type or group of the operating communication-enabled public utility devices, wherein the public utility system is configured such that:
-- each operating communication-enabled public utility device of the plurality of operating communication-enabled public utility devices is assigned to a specific group of communication-enabled public utility devices,
-- a number of measurements are conducted by means of the at least one sensor device or the at least one sensor module,
   -- either related to individual communication-enabled public utility devices,
   -- or collectively related to a number of communication-enabled public utility devices,
   wherein the public utility system is furthermore configured such that the measurements conducted yield certain measurement data, wherein the measurement data are - dependent on the assignment of a communication-enabled public utility device of the plurality of communication-enabled public utility devices to the specific group of communication-enabled public utility devices - related to the respective type or group of operating communication-enabled public utility devices or to the respective plurality of types or groups of operating communication-enabled public utility devices, and stored in the database entity as part of the respective device type-related record for the type or group of operating communication-enabled public utility devices or for the respective plurality of types or groups of operating communication-enabled public utility devices, respectively.

Thereby, it is advantageously possible to provide a public utility system that provides the advantages of the inventive method.

Furthermore, the present invention relates to a communication-enabled public utility device for enhanced management of a public utility system, the public utility system comprising a plurality of operating communication-enabled public utility devices, the public utility system further comprising a communication means for communicating
-- between at least two operating communication-enabled public utility devices, and/or
-- between, on the one hand, at least one of the operating communication-enabled public utility devices, and, on the other hand, the communication means, and/or
-- between, on the one hand, at least one sensor device or a sensor module of a communication-enabled public utility device, and, on the other hand, the communication means and/or one or a plurality of communication-enabled public utility devices, wherein the plurality of operating communication-enabled public utility devices are split into a plurality groups of communication-enabled public utility devices, wherein the public utility system comprises a system management layer that interfaces with a database entity, the database entity having a device type-related record for each device type or group of the operating communication-enabled public utility devices, wherein the communication-enabled public utility devices is configured such that:
   -- each operating communication-enabled public utility device of the plurality of operating communication-enabled public utility devices is assigned to a specific group of communication-enabled public utility devices,
   -- a number of measurements are conducted by means of the at least one sensor device or the at least one sensor module,
      -- either related to individual communication-enabled public utility devices,
      -- or collectively related to a number of communication-enabled public utility devices,
      wherein the communication-enabled public utility devices is furthermore configured such that the measurements conducted yield certain measurement data, wherein the measurement data are - dependent on the assignment of a communication-enabled public utility device of the plurality of communication-enabled public utility devices to the specific group of communication-enabled public utility devices - related to the respective type or group of operating communication-enabled public utility devices or to the respective plurality of types or groups of operating communication-enabled public utility devices, and stored in the database entity as part of the respective device type-related record for the type or group of operating communication-enabled public utility devices or for the respective plurality of types or groups of operating communication-enabled public utility devices, respectively.

Additionally, the present invention relates to a program comprising a computer readable program code which, when executed on a computer or on a component of a public utility system or on a communication-enabled public utility device or on a network component of a communication means of a public utility system or in part on a component of public utility system and/or in part on a communication-enabled public utility device and/or in part on a network component of a communication means of a public utility system, causes the computer and/or the component of the public utility system and/or the communication-enabled public utility device and/or the network component of the communication means of the public utility system to perform the inventive method.

Still additionally, the present invention relates to a computer program product for enhanced management of a public utility system, the computer program product comprising a computer program stored on a storage medium, the computer program comprising program code which, when executed on a computer or on a component of a public utility system or on a communication-enabled public utility device or on a network component of a communication means of a public utility system or in part on a component of public utility system and/or in part on a communication-enabled public utility device and/or in part on a network component of a communication means of a public utility system, causes the computer and/or the component of the public utility system and/or the communication-enabled public utility device and/or the network component of the communication means of the public utility system to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

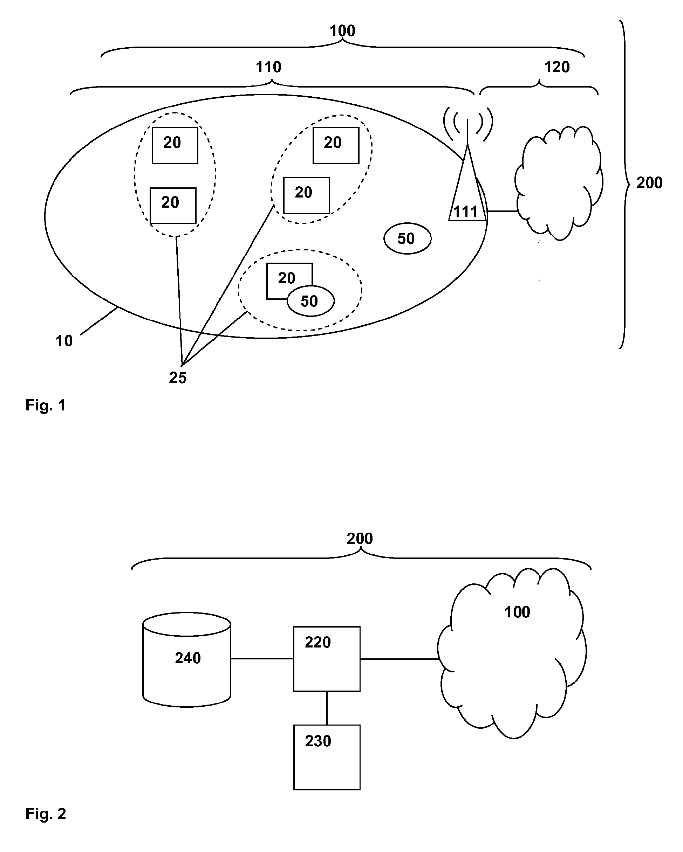

Figure 1 schematically illustrate a public utility system, comprising a plurality of operational communication-enabled public utility devices being assigned to different groups of communication-enabled public utility devices, and a communication means in the form of a mobile communication network, the mobile communication network comprising a radio cell being served by a base station entity.
Figure 2 schematically illustrates another representation of the public utility system according to the present invention, the public utility system comprising a system management layer, a database entity, an operation layer as well as the communication means.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In **Figure 1****,** a public utility system 200, comprising a plurality of operational communication-enabled public utility devices 20 as well as one or a plurality of sensor devices 50 or sensor modules 50, and a communication means 100 in the form of a mobile communication network 100, the mobile communication network 100 comprising a radio cell 10 being served by a base station entity 111. The communication-enabled public utility devices 20 are assigned to different groups 25 of communication-enabled public utility devices, the different groups 25 especially comprising communication-enabled public utility devices of a specific device type. In the exemplary embodiment of the communication means 100 as a mobile communication network 100 shown in Figure 1, the mobile communication network 100 comprises an access network 110 and a core network 120. The core network 120 is only schematically shown by means of a cloud representation. The public land mobile network 100 (especially the core network 120) comprises typically various network elements such as an MSC (Mobile Switching Center), a SGSN (Serving GPRS Support Node), a MME (Mobility Management Entity), preferably a plurality of network elements thereof. The mobile communication network 100 is preferably a cellular telecommunications network comprising typically a plurality of network radio cells, one of which is represented in Figure 1. The base station entity 111 is typically a base station, e.g. a NodeB or an eNodeB base transceiver station. The mobile communication network 100 is configured to provide - in the exemplary situation represented in Figure 1 - the functionality of the communication means 100 according to the present invention.

Alternatively and likewise according to the present invention, the communication means 100 can be provided (instead of by a mobile communication network and/or in addition to a mobile communication network), e.g., by a Bluetooth ad hoc network, or a communication network (linking at least part of the communication-enabled public utility devices 20 and/or the sensor devices 50 or sensor modules 50) according to a different communication standard or access technology.

The public utility system 200 according to the present invention is also represented in **Figure 2****,** which shows another representation of the public utility system 200 according to the present invention, the public utility system 200 comprising a system management layer 220, a database entity 240, an operation layer 230 as well as the communication means 100. In the exemplary embodiment represented in Figure 2, the database entity 240 is connected to the system management layer 220. Furthermore, the system management layer 220 is connected to the operation layer 230 (or operation entity 230). Additionally, the system management layer 220 is connected to the communication means 100. According to an alternative embodiment (not represented in Figure 2) - in addition to the system management layer 220 being connected to the database entity 240, the operation layer 230, and the communication means 100 - the operation layer 230 is additionally also connected to the database entity 240. In this respect (i.e. for both of these mentioned alternative embodiments), the term connected means that either a logical (perhaps indirect) communication link or a direct physical communication link either is (more or less constantly) existent or is able to be created or initiated (upon request by at least one of the components or entities connected via the respective communication link).

According to the inventive method of the present invention, the plurality of operating communication-enabled public utility devices 20 are split into a plurality groups of communication-enabled public utility devices 20 by means of the following steps:
-- in a first step, each operating communication-enabled public utility device of the plurality of operating communication-enabled public utility devices is assigned to a specific group 25 of communication-enabled public utility devices,
-- in a second step, subsequent to the first step, a number of measurements are conducted by means of the at least one sensor device 50 or the at least one sensor module 50,
   -- either related to individual communication-enabled public utility devices 20,
   -- or collectively related to a number of communication-enabled public utility devices 20,
   wherein the measurements conducted in the second step yield certain measurement data, wherein the measurement data are - dependent on the assignment of a communication-enabled public utility device 20 of the plurality of communication-enabled public utility devices 20 to the specific group 25 of communication-enabled public utility devices 20 - related to the respective type or group of operating communication-enabled public utility devices 20 or to the respective plurality of types or groups of operating communication-enabled public utility devices 20, and stored in the database entity as part of the respective device type-related record for the type or group of operating communication-enabled public utility devices 20 or for the respective plurality of types or groups of operating communication-enabled public utility devices 20, respectively.

Especially and according to a preferred embodiment of the present invention, the method comprises a third step, subsequent to the first step, the third step comprising repeating the assignment - performed in the first step -, resulting in assigning at least one communication-enabled public utility device of the plurality of communication-enabled public utility devices 20 to a different further specific group of communication-enabled public utility devices 20 compared to the specific group 25 of communication-enabled public utility devices 20 to which the respective communication-enabled public utility devices 20 have been assigned to in the first step. This situation might apply to the case where two different groups of communication-enabled public utility devices exist, each one comprising communication-enabled public utility devices of the same type but the devices of the first group have been put into operation several months prior to the devices of the second group; in case that a device of the first group shows a behavior corresponding rather to the behavior of the devices of the second group, this device can be re-assigned (to the second group) in order to apply a more appropriate control of that device. However, it is also possible and preferred according to the present invention that the further specific group of communication-enabled public utility devices 20 especially corresponds to a group of communication-enabled public utility devices 20 having been newly created subsequent to the first step, i.e. in order to apply a more appropriate control to the devices of one group of devices, the group is divided (a new group created or generated), and at least part of the devices of the initial group (or "parent" group) is re-assigned to the newly created group (or "child" group). However, according to an alternative embodiment of the present invention, a new group of devices can be created based on a plurality of initial (or "parent") groups: in such a case, the new group comprises devices that initially have been in at least two groups of devices.

The inventive public utility system and the inventive method is especially related to providing intelligent public services, especially intelligent lighting, and especially in public and/or private spaces. Intelligent lighting controls (the processors usually being integrated either in LED fixtures or in remotely controllable energy efficient lighting fixtures, in order to allow them to be remotely operated either individually, or in clusters) are usually equipped with connectivity modules using one (or a plurality) of the main communication protocols (2G/3G/4G/5G (i.e. mobile communication networks of the second and/or third and/or fourth and/or fifth generation), Zigbee, Bluetooth, 6lowpan, Wi-Fi, over the power-line communication, etc.). Therefore, such lighting controls correspond to communication-enabled public utility devices 20 according to the present invention. Such intelligent lighting controls or communication-enabled public utility devices 20 can, especially, be utilized with different lighting technologies (LED, Low Pressure/High pressure sodium, etc.). According to the present invention, a well "balanced" lighting infrastructure is able to be realized. Traditionally, this can only be achieved by means of a "planning effort", usually performed by expert light engineers and consists in correctly combining the different lighting technologies (legacy and new) used in the luminaries in the field, in order to provide an homogeneous output (lumens per surface), compliant with the specific regulations related to the location where the light points are located (road, street, squares, etc). According to the present invention, it is advantageously possible to continually and remotely monitoring the output of the luminaries (or communication-enabled public utility devices) in order to keep the light output steady over time and assure a more balanced energy consumption. Hence, designing Intelligent street lighting networks, allows to exploit the existence of lighting controls to correctly deploy, operate and maintain vast networks of luminaries, by leveraging on assets management databases available for accounting and / or operational purposes. In addition to this, in case the lighting controls mentioned above are interacting with lighting technologies allowing the modulation of the light (or lumen) output, as LED luminaries for example (this functionality being usually referred to as "dimming capability" and consists in the possibility to reduce and/or increase the input of power into the luminaries, in order to produce a different luminosity output), it is possible according to the present invention to perform more operations on them, like "almost real time" switch on/off, dynamic steering via motion sensors, advanced dimming, etc. Furthermore according to the present invention, all these operations are especially possible on a one to one relationship, i.e. typically with each single lamp (or LED luminary) in the network (i.e. sending one instruction to a single device or lamp). Furthermore, it is more and more common that new communication-enabled public utility devices (especially LED luminaries) can be equipped with motion and / or luminosity sensors, in order to be dynamically dimmed in case specific events are recorded by the sensors during darkest hours. In case lighting controls with metering functionalities are also installed on those luminaries, all these events can be recorded and can help designing operational and behavioral patterns pertinent to the specific location (how often the motion sensor is engaged at night in that location during week days or weekends, how this changes over seasons, etc.).

It is especially preferred according to the present invention that the public utility system 200 comprises, on its lowest layer, the communication-enabled public utility devices 20, especially luminaries and/or sensors 50 and/or other devices. On a superior layer, a data transport layer is provided. Furthermore on a superior layer, a data management layer is provided. On the top layer of the public utility system 200, an application layer is provided.

According to the present invention, the different communication networks, device types (i.e. of the communication-enabled public utility devices 20 and/or of the sensor devices 50) and infrastructures are enabled to interwork, especially by means of wrapping the different interfaces in an enabling layer (especially the system management layer 220) and are allowed to be operated and controlled by applications (within the application layer of the public utility system 200).

The present invention is based on reducing the complexity of managing the ecosystems of public utility systems comprising communication-enabled public utility devices and realizing this complexity reduction by means of a structured ICT approach, exploiting the possibilities and opportunities provided both by the new lighting and control technologies, but also by the advancements in the development of big data analytics. The approach according to the present invention is based on building databases of behavioral parameters for different luminaries, identifying their actual output vs their nominal one and defining lifetime behavioral profiles based on their recorded performance (output) over time. The system according to the present invention is designed to be "self-learning" and able to add additional information while these are recorded and categorized within predefined clusters, these databases recording features like:
a) the manufacturer of the communication-enabled public utility devices,
b) the model and/or type or series of the communication-enabled public utility devices,
c) the lighting technology used,
d) the nominal output (usually associated to wattage input) of the lamps or communication-enabled public utility devices,
e) the electronic components manufacturer,
f) the driver firmware versions, etc.

This ensures that every time a known luminary is added to the "network", it should be recognized and on the basis of the recorded profile, a specific, individual behavioral pattern could be proposed to the operator when configuring the daily operations related to that light-point (when to switch on, at what lumen output intensity, etc.).

In case that an unknown communication-enabled public utility device (or luminary) is added to the network, the system simulates itself - on the bases of assumptions based on the available information (LED nominal output, drivers information, electronic components parameters, etc.) - a proposed operational pattern to be associated to the communication-enabled public utility device (or luminary). The self-learning algorithm then matches the actual reading results to the simulation and adjust the operational models to reality. By adding also information in the database on the specific luminary (Brand, detailed information on the lenses, refractors, electronic components, lighting control, etc.), the operator is able to receive a more accurate simulation (leading to a continued effort to proceed, over time, in integrating and enriching the information in the database).

These behavioral patterns advantageously specify the real power (wattage) input to be provided to the luminary in order to generate the desired luminosity output (lumens) at the specific locations where it is installed.

In this way, the amount of power provided to the luminary would be rationally optimized and reduced to the one necessary for that specific "product" (manufacturer, series, electronic components, drivers, refractor, lenses, lighting technology), in order to produce the desired lumens output required for the daily operations.

The other dimension which this approach allows to control, is the "curve" of provided power input and matching this curve it to the "dawn to dusk" curve of luminosity naturally available (either recorded or based on astronomical calendars, location, altitude, etc. or measured, especially in real-time in order to be able to appropriately handle unusual situations or weather conditions or the like).

Considering LED technologies allowing a "real" time interaction with the luminary, it is advantageously possible to generate an extremely optimized power input pattern, reducing the load on the grid to the minimum terms necessary to guarantee the required luminosity output (i.e. lighting output being the luminous flux (measured in Lumen) or the luminous flux per unit area (illuminance or luminous emittance, measured in Lux)).

It is known that each device or at least each type of device has an efficiency curve showing a maximum efficiency at a specific power input (i.e. the output, such as lumens per watt, peaks at a certain power input, e.g. measured in input current) being different for each of the devices and especially for each device type. Such differences (in the peak efficiency conditions of the respective communication-enabled public utility device or type of communication-enabled public utility devices) are addressed by means of the present invention, and it is immediately evident that important gains in efficiency are able to be realized by means of such an approach, not only in terms of energy savings, but also in terms of simplicity of configuration of the lighting network or public utility system.

The other dimension to be addressed is related to the recording of luminary performance data over time: according to the present invention, such recorded data (or measurement data) is able to yield (or it is able to create) - via the processing of such data via (big data) algorithms - specific lifetime behavioral pattern (or it is possible to adjust them on the basis of real-time behavior recorded in specific environmental conditions).

This means that, if over its lifetime, the luminary (or communication-enabled public utility device) has a particular "decay curve" (its output is reduced because of wear and tear of the components), this is detected by means of the measurement data, and fed to the database in order to adapt the operational schedules such that the power input to maintain the luminosity output is adapted such as to provide the luminosity or lumens output (i.e. lighting output being the luminous flux or the luminous flux per unit area) at a constant and required level.

In case the luminary (or communication-enabled public utility device) is also able to record environmental conditions like external temperature, humidity, etc. (or it is possible to use environmental conditions to be associated to specific moments in the luminary lifetime, e.g. coming from external sources), the behavioral pattern is able to be modified using those variables as adjusting factor that should be considered every time the intelligent lighting network, or public utility system, is able to track and monitor those variables.

This additional level of "predictability" of the luminary behavior advantageously allows to keep the operating conditions as much as possible in an optimal range and under control and, not only adding additional efficiency to the operating and management pattern, but also reduce the wear and tear factors to a minimum (causing the output of the communication-enabled public utility devices to decay), allowing to extend the lifetime of the respective device and, hence, increase the overall efficiency of the public utility system.

From this point of view, adding - into the database - recordings of particular weather conditions (which are overlaying onto average conditions, such as, e.g., every time the temperature during a specific month goes over the average recorded of more than a certain percent value or more than a certain number of Kelvin) and associating them to specific lumen or luminosity output readings events (drop in the luminosity at the usual recording heights), also helps predicting the behavioral pattern which allow to dynamically adjust the power input in order to keep the luminosity level (i.e. lighting output being the luminous flux or the luminous flux per unit area) stable in case those weather conditions materialize again.

According to the present invention, it is advantageously possible that the algorithm also factors in how the impact of these external, environmental conditions (air pollution, measured in fine dust or fine particles (such as PM 2,5 particles) or other standard indicators) and the known decay of the luminaries in the network, impact the output (i.e. lighting output being the luminous flux or the luminous flux per unit area) at the distance of a given period of time (e.g., simulating the impact of the one year decaying factor in case of weather conditions recorded in spring season in year 1, compared to similar conditions in spring season in year 2).

## Claims

1. Method for enhanced management of a public utility system (200), the public utility system (200) comprising a plurality of operating communication-enabled public utility devices (20), wherein the public utility system (200) further comprises a communication means (100) for communicating
-- between at least two operating communication-enabled public utility devices (20), and/or
-- between, on the one hand, at least one of the operating communication-enabled public utility devices (20), and, on the other hand, the communication means (100), and/or
-- between, on the one hand, at least one sensor device (50) or a sensor module (50) of a communication-enabled public utility device, and, on the other hand, the communication means (100) and/or one or a plurality of communication-enabled public utility devices (20),
wherein the plurality of operating communication-enabled public utility devices (20) are split into a plurality groups (25) of communication-enabled public utility devices (20), wherein the public utility system (200) comprises a system management layer (220) that interfaces with a database entity (240), the database entity (240) having a device type-related record for each device type or group (25) of the operating communication-enabled public utility devices (20), wherein the method comprises the steps of:
-- in a first step, each operating communication-enabled public utility device of the plurality of operating communication-enabled public utility devices (20) is assigned to a specific group (25) of communication-enabled public utility devices (20),
-- in a second step, subsequent to the first step, a number of measurements are conducted by means of the at least one sensor device (50) or the at least one sensor module (50),
-- either related to individual communication-enabled public utility devices (20),
-- or collectively related to a number of communication-enabled public utility devices (20),
wherein the measurements conducted in the second step yield certain measurement data, wherein the measurement data are - dependent on the assignment of a communication-enabled public utility device of the plurality of communication-enabled public utility devices (20) to the specific group (25) of communication-enabled public utility devices (20) - related to the respective type or group (25) of operating communication-enabled public utility devices (20) or to the respective plurality of types or groups (25) of operating communication-enabled public utility devices (20), and stored in the database entity (240) as part of the respective device type-related record for the type or group (25) of operating communication-enabled public utility devices (20) or for the respective plurality of types or groups (25) of operating communication-enabled public utility devices (20), respectively.

2. Method according to claim 1, wherein the device type-related records for each device type or group (25) of operating communication-enabled public utility devices (20) are used to adapt or to optimize the operation of the respective device type or group (25) of operating communication-enabled public utility devices (20),
especially by means of individually controlling - at least for each device type or group (25) of operating communication-enabled public utility devices (20) - at least one operational parameter out of the following operation parameters:
-- input voltage,
-- input current,
wherein each device type or group (25) of operating communication-enabled public utility devices (20) is especially controlled such that the output of the corresponding communication-enabled public utility devices (20), especially a lighting output being the luminous flux (measured in Lumen) or the luminous flux per unit area (illuminance or luminous emittance, measured in Lux), is as constant as possible over the lifetime of the respective communication-enabled public utility devices (20) or follows as accurately as possible a certain predefined or instantaneously determined value or set-point.

3. Method according to one of the preceding claims, wherein at least part of the measurement data, provided by the at least one sensor device (50) or the at least one sensor module (50), are used to determine the predefined or instantaneously determined value or set-point related to the output of the communication-enabled public utility devices (20) corresponding to the respective device type or group (25) of operating communication-enabled public utility devices (20).

4. Method according to one of the preceding claims, wherein the method comprises a third step, subsequent to the first step, the third step comprising repeating the assignment - performed in the first step -, resulting in assigning at least one communication-enabled public utility device of the plurality of communication-enabled public utility devices (20) to a different further specific group of communication-enabled public utility devices (20) compared to the specific group (25) of communication-enabled public utility devices (20) to which the respective communication-enabled public utility devices (20) have been assigned to in the first step,
wherein the further specific group (25) of communication-enabled public utility devices (20) especially corresponds to a group (25) of communication-enabled public utility devices (20) having been newly created subsequent to the first step.

5. Method according to one of the preceding claims, wherein the method comprises a fourth step, prior to the second step or subsequent to the first step, the fourth step comprising storing initial device type-related information (300) in the database entity (240), the initial device type-related information (300) being especially related to the further specific group (25) of communication-enabled public utility devices (20) having been newly created subsequent to the first step.

6. Method according to one of the preceding claims, wherein by means of the system management layer (220) the data transport and the data management is decoupled from the management of the communication-enabled public utility devices (20)

7. Method according to one of the preceding claims, wherein the public utility system (200) correspond, at least inter alia, to an intelligent lighting system, and wherein the communication-enabled public utility devices (20) correspond to intelligent lighting devices, especially providing illumination to a street or to a premises served by the intelligent lighting system.

8. Method according to one of the preceding claims, wherein the at least one sensor device (50) or the at least one sensor modules (50) of a communication-enabled public utility device are light sensor devices and/or light sensor modules and/or current sensor devices and/or current sensor modules and/or voltage sensor devices and/or voltage sensor modules, especially having processing capabilities, especially as light control and/or as traffic light control and/or as video cameras and/or as camera devices and/or as infra-red sensor means.

9. Public utility system (200) for enhanced management thereof, the public utility system (200) comprising a plurality of operating communication-enabled public utility devices (20), wherein the public utility system (200) further comprises a communication means (100) for communicating
-- between at least two operating communication-enabled public utility devices (20), and/or
-- between, on the one hand, at least one of the operating communication-enabled public utility devices (20), and, on the other hand, the communication means (100), and/or
-- between, on the one hand, at least one sensor device (50) or a sensor module (50) of a communication-enabled public utility device, and, on the other hand, the communication means (100) and/or one or a plurality of communication-enabled public utility devices (20),
wherein the plurality of operating communication-enabled public utility devices (20) are split into a plurality groups (25) of communication-enabled public utility devices (20), wherein the public utility system (200) comprises a system management layer (220) that interfaces with a database entity (240), the database entity (240) having a device type-related record for each device type or group (25) of the operating communication-enabled public utility devices (20), wherein the public utility system (200) is configured such that:
-- each operating communication-enabled public utility device of the plurality of operating communication-enabled public utility devices (20) is assigned to a specific group (25) of communication-enabled public utility devices (20),
-- a number of measurements are conducted by means of the at least one sensor device (50) or the at least one sensor module (50),
-- either related to individual communication-enabled public utility devices (20),
-- or collectively related to a number of communication-enabled public utility devices (20),
wherein the public utility system (200) is furthermore configured such that the measurements conducted yield certain measurement data, wherein the measurement data are - dependent on the assignment of a communication-enabled public utility device of the plurality of communication-enabled public utility devices (20) to the specific group (25) of communication-enabled public utility devices (20) - related to the respective type or group (25) of operating communication-enabled public utility devices (20) or to the respective plurality of types or groups (25) of operating communication-enabled public utility devices (20), and stored in the database entity (240) as part of the respective device type-related record for the type or group (25) of operating communication-enabled public utility devices (20) or for the respective plurality of types or groups (25) of operating communication-enabled public utility devices (20), respectively.

10. Communication-enabled public utility device (20) for enhanced management of a public utility system (200), the public utility system (200) comprising a plurality of operating communication-enabled public utility devices (20), the public utility system (200) further comprising a communication means (100) for communicating
-- between at least two operating communication-enabled public utility devices (20), and/or
-- between, on the one hand, at least one of the operating communication-enabled public utility devices (20), and, on the other hand, the communication means (100), and/or
-- between, on the one hand, at least one sensor device (50) or a sensor module (50) of a communication-enabled public utility device, and, on the other hand, the communication means (100) and/or one or a plurality of communication-enabled public utility devices (20),
wherein the plurality of operating communication-enabled public utility devices (20) are split into a plurality groups (25) of communication-enabled public utility devices (20), wherein the public utility system (200) comprises a system management layer (220) that interfaces with a database entity (240), the database entity (240) having a device type-related record for each device type or group (25) of the operating communication-enabled public utility devices (20), wherein the communication-enabled public utility devices (20) is configured such that:
-- each operating communication-enabled public utility device of the plurality of operating communication-enabled public utility devices (20) is assigned to a specific group (25) of communication-enabled public utility devices (20),
-- a number of measurements are conducted by means of the at least one sensor device (50) or the at least one sensor module (50),
-- either related to individual communication-enabled public utility devices (20),
-- or collectively related to a number of communication-enabled public utility devices (20),
wherein the communication-enabled public utility devices (20) is furthermore configured such that the measurements conducted yield certain measurement data, wherein the measurement data are - dependent on the assignment of a communication-enabled public utility device of the plurality of communication-enabled public utility devices (20) to the specific group (25) of communication-enabled public utility devices (20) - related to the respective type or group (25) of operating communication-enabled public utility devices (20) or to the respective plurality of types or groups (25) of operating communication-enabled public utility devices (20), and stored in the database entity (240) as part of the respective device type-related record for the type or group (25) of operating communication-enabled public utility devices (20) or for the respective plurality of types or groups (25) of operating communication-enabled public utility devices (20), respectively.

11. Program comprising a computer readable program code which, when executed on a computer or on a component of a public utility system (200) or on a communication-enabled public utility device (20) or on a network component of a communication means (100) of the public utility system (200) or in part on a component of public utility system (200) and/or in part on a communication-enabled public utility device (20) and/or in part on a network component of a communication means (100) of the public utility system (200), causes the computer and/or the component of the public utility system (200) and/or the communication-enabled public utility device (20) and/or the network component of the communication means (100) of the public utility system (200) to perform a method according to one of claims 1 to 8.

12. Computer program product for enhanced management of a public utility system (200), the computer program product comprising a computer program stored on a storage medium, the computer program comprising program code which, when executed on a computer or on a component of a public utility system (200) or on a communication-enabled public utility device (20) or on a network component of a communication means (100) of the public utility system (200) or in part on a component of public utility system (200) and/or in part on a communication-enabled public utility device (20) and/or in part on a network component of a communication means (100) of the public utility system (200), causes the computer and/or the component of the public utility system (200) and/or the communication-enabled public utility device (20) and/or the network component of the communication means (100) of the public utility system (200) to perform a method according to one of claims 1 to 8.
